# EUROPÄISCHE PATENTANMELDUNG

(11) **EP 4 813 197 A1**
(43) Veröffentlichungstag der Anmeldung: **30.09.2026**
(21) Anmeldenummer: 26160966.3
(22) Anmeldetag: 26.02.2026
(51) Int. Cl.: A01G 13/21, A01G 13/24

(54) **ABDECKVORRICHTUNG FÜR EINE OBSTANLAGE UND OBSTANLAGE MIT ABDECKVORRICHTUNG**

(30) Priorität: 28.02.2025 DE 102025107801
(71) Anmelder: Merkle, Georg, 74343 Sachsenheim (DE)
(72) Erfinder: Merkle, Georg, 74343 Ochsenbach (DE)
(74) Vertreter: Herrmann, Jochen

(57) **Zusammenfassung**

Die Erfindung betrifft eine Abdeckvorrichtung (100) für eine Obstanlage (10), insbesondere für eine Stellage-Obstanlage. Die Erfindung betrifft auch eine Obstanlage (10) mit einer Abdeckvorrichtung (100). Ein Abdecken sowie ein Entfernen der Abdeckung der Obstanlage wird auf einfache Weise ermöglicht, indem vorgesehen ist, dass die Abdeckvorrichtung (100) eine Schirmvorrichtung (120) zur zumindest teilweisen Abdeckung zumindest einer Pflanze (17) der Obstanlage (10) von oben und von zumindest zwei einander gegenüberliegenden Seiten aufweist, wobei die Schirmvorrichtung (120) einen oberen Abdeckbereich (121) und zumindest zwei einander gegenüberliegende seitliche Abdeckbereiche (122) aufweist, sodass die Abdeckbereiche (121, 122) einen Aufnahmeraum (123) zur zumindest teilweisen Aufnahme der Pflanze(n) (17) nach oben und zu den Seiten hin begrenzen, und wobei die Schirmvorrichtung (120) eine unterseitige Öffnung (124) aufweist, die einen Zugang zu dem Aufnahmeraum (123) bildet, und indem die Abdeckvorrichtung (100) eine Hebevorrichtung (140) zum Anheben und Absenken der Schirmvorrichtung (120) umfasst.

## Beschreibung

Die Erfindung betrifft eine Abdeckvorrichtung für eine Obstanlage, insbesondere für eine Stellage-Obstanlage. Die Erfindung betrifft auch eine Obstanlage mit einer Abdeckvorrichtung.

Im Rahmen der Erfindung wird unter einer Obstanlage eine Anordnung mehrerer Obstpflanzen verstanden. Insbesondere kann es sich um mehrere entlang einer Längsrichtung aneinandergereihte Obstpflanzen handeln. Die Obstpflanzen können beispielsweise einzeln in Töpfen, zu mehreren in Kästen und/oder in Substratsäcken aufgenommen sein. Häufig werden Töpfe, Kästen und/oder Substratsäcke von einem Träger aufgenommen, der beispielsweise auf einem Gestell und/oder mehreren Trägern gegenüber dem Boden abgestützt sein kann. Hierunter versteht die Erfindung eine Stellage-Obstanlage. Obstanlagen können beispielsweise in Gewächshäusern, insbesondere Glashäusern oder Folientunneln aufgenommen sein. Bei den Pflanzen einer Obstanlage im Rahmen der Erfindung kann es sich bevorzugt um Beerenobst, insbesondere um Erdbeerpflanzen handeln. Eine Obstanlage kann auch eine sogenannte Dammanlage sein, bei der ein Erddamm geformt ist, auf dem dann Pflanzen, insbesondere Erdbeerpflanzen, aneinandergereiht sind.

Aus dem Stand der Technik ist es bekannt, Obstanlagen zum Schutz vor Kälte, insbesondere vor Frost, zumindest über die Nachtstunden, mittels Folien oder Vliesstoffen abzudecken. Auf diese Weise kann ein Entweichen von Wärme, die über den Tag bzw. während der Sonnenstunden in die Pflanzen oder deren Substrat eingebracht wurde, verzögert werden.

Nachteilig ist hierbei der Aufwand, der gegebenenfalls täglich betrieben werden muss, um die Folien bzw. Stoffe auf die Pflanzen zu legen. Ferner müssen diese Abdeckungen immer wieder entfernt werden, beispielsweise um Licht an die Pflanzen zu lassen und/oder um an der Obstanlage zu arbeiten. Auch die Lagerung der häufig großen flächenartigen Abdeckungen kann Probleme bereiten und stellt sich meist unhandlich dar.

Es ist Aufgabe der Erfindung, eine Abdeckvorrichtung für eine Obstanlage bereitzustellen, die ein Ab- und Aufdecken der Obstanlage auf einfache Weise ermöglicht.

Es ist auch Aufgabe der Erfindung, eine Obstanlage bereitzustellen, die auf einfache Weise ab- und aufgedeckt werden kann.

Die die Abdeckvorrichtung betreffende Aufgabe wird mit einer Abdeckvorrichtung gemäß Anspruch 1 gelöst. Demnach ist vorgesehen, dass die Abdeckvorrichtung eine Schirmvorrichtung zur zumindest teilweisen Abdeckung zumindest einer Pflanze der Obstanlage von oben und von zumindest zwei einander gegenüberliegenden Seiten umfasst. Die Schirmvorrichtung weist einen oberen Abdeckbereich und zumindest zwei einander gegenüberliegende seitliche Abdeckbereiche auf. Somit begrenzen die Abdeckbereiche einen Aufnahmeraum zur zumindest teilweisen Aufnahme der Pflanze(n) nach oben und zu den Seiten hin. Die Schirmvorrichtung weist eine unterseitige Öffnung auf, die einen Zugang zu dem Aufnahmeraum bildet.

Mittels der Abdeckvorrichtung kann insbesondere eine Verfrühung der Reife erzielt werden, sodass eine frühere Marktreife der Früchte erreichbar ist. Auch kann ein Schutz vor Frost bewirkt und/oder unterstützt werden.

Dadurch, dass erfindungsgemäß eine Hebevorrichtung zum Anheben und Absenken der Schirmvorrichtung vorgesehen ist, werden die oben genannten Nachteile des Standes der Technik behoben. Insbesondere ist es mittels des Anhebens der Schirmvorrichtung möglich, die Obstanlage aufzudecken, sodass Licht und/oder Wärme zu den Pflanzen gelangen kann/können. Ferner kann ein Arbeiten an der Obstanlage erleichtert werden, da die Schirmvorrichtung im angehobenen Zustand die Pflanzen freigibt. Wenn die Pflanzen, beispielsweise über Nacht, wieder abgedeckt werden sollen, kann die Schirmvorrichtung einfach mittels der Hebevorrichtung abgesenkt werden. Darüber hinaus ergibt sich in der Zwischenzeit, wenn die Pflanzen nicht abgedeckt sein sollen, kein Aufwand für die Lagerung, da die Schirmvorrichtung einfach in der angehobenen Position verbleiben kann.

Gemäß einer vorteilhaften Weiterbildung der Erfindung kann vorgesehen sein, dass die Schirmvorrichtung einen Auflaufbereich aufweist, der eine Aufweitung des Aufnahmeraums im Bereich der unterseitigen Öffnung bildet. Die Aufweitung kann insbesondere derart sein, dass die seitlichen Abdeckbereiche auf die unterseitige Öffnung hin voneinander zunehmend beabstandet sind. Vorzugsweise kann die Zunahme der Beabstandung kontinuierlich erfolgen. Mittels des Auflaufbereichs kann verhindert werden, dass die Schirmvorrichtung beim Absenken mit den Pflanzen und/oder sonstigen Komponenten der Obstanlage, beispielsweise einem Träger, Gestell oder dergleichen kollidiert und/oder sich mit diesen verhakt. Mit anderen Worten kann der Auflaufbereich ähnlich einer Einführschräge wirken.

Eine konstruktiv einfache und leicht bauende Lösung kann erreicht werden, wenn die Schirmvorrichtung ein flächiges Schirmelement aufweist. Vorzugsweise kann das Schirmelement eine Folie aufweisen, insbesondere im Wesentlichen aus einer Folie gebildet sein. Als Folie kommt beispielsweise eine Kunststofffolie in Betracht.

Denkbar ist auch, dass das flächige Schirmelement einen Stoff aufweist, insbesondere im Wesentlichen aus einem Stoff gebildet ist. Vorzugsweise kann zur Regulierung der Luftfeuchtigkeit innerhalb des Aufnahmeraums ein dampfdurchlässiger Stoff vorgesehen sein. Als Stoff kommt insbesondere ein Vliesstoff in Betracht.

Das Schirmelement kann mehrlagig aufgebaut sein, insbesondere mehrere Folien- und/oder Stofflagen aufweisen.

Alternativ oder zusätzlich kann eine einteilige Bauweise des Schirmelements vorgesehen sein, wobei das Schirmelement vorzugsweise eine Rohrhalbschale aufweist, insbesondere zumindest teilweise als Rohrhalbschale ausgebildet ist. Vorzugsweise kann eine Acrylglas-Halbschale zum Einsatz kommen.

Es kann sein, dass das Schirmelement einen Oberteil aufweist, der den oberen Abdeckbereich zumindest teilweise bildet. Denkbar ist natürlich auch, dass der obere Abdeckbereich von einem anderen Teil der Abdeckvorrichtung gebildet wird, beispielsweise von einem Koppelteil, mittels dessen die Schirmvorrichtung gegenüber der Schwerkraft abgestützt sein kann. Es kann alternativ oder zusätzlich vorgesehen sein, dass das Schirmelement Seitenteile aufweist, die die seitlichen Abdeckbereiche bilden.

Besonders vorteilhaft kann es sein, wenn das Schirmelement sowohl einen Oberteil als auch Seitenteile aufweist. In diesem Fall können diese einteilig ineinander übergehen und das Schirmelement zumindest bereichsweise beispielsweise als durchgehende Folie gebildet sein.

Dabei kann erfindungsgemäß vorgesehen sein, dass die Seitenteile der Schirmvorrichtung, insbesondere im unteren Bereich der Schirmvorrichtung, Komponenten der Obstanlage überdecken. Das Überdecken kann insbesondere ein Übergreifen von oben beinhalten, sodass Komponenten der Obstanlage zumindest teilweise innerhalb des Aufnahmeraums aufgenommen sein können. Dabei kann vorgesehen sein, dass die Seitenteile der Schirmvorrichtung Seitenwände eines Trägers der Obstanlage überdecken. Vorzugsweise kann die Schirmvorrichtung mit den Seitenwänden, beispielsweise im Bereich des Auflaufbereichs, an zumindest einer Seitenwand des Trägers abgestützt werden. An dem Träger ist dabei mittig ein Topf für zumindest eine Pflanze angeordnet. Durch die Abstützung der Schirmvorrichtung an dem Träger ergibt sich der Vorteil eines vergrößerten Aufnahmeraums für die Pflanzen und/oder einer zuverlässigen Beabstandung der Seitenteile der Schirmvorrichtung von den Pflanzen, sodass diese bei Absenken oder Anheben der Schirmvorrichtung nicht beschädigt werden.

Ein verbesserter Schutz vor Wärmeverlusten kann erreicht werden, wenn das Schirmelement eine reflektierende Beschichtung aufweist. Hierbei kommt insbesondere eine Aluminium-Kaschierung in Betracht. Vorzugsweise kann die reflektierende Beschichtung auf einer zu dem Aufnahmeraum gerichteten Innenseite des Schirmelements aufgebracht sein.

Alternativ oder zusätzlich kann vorgesehen sein, dass das Schirmelement eine Wärmedämmung aufweist, insbesondere in Form einer wärmedämmenden Schicht. Zur Wärmedämmung kommen gängige Dämmstoffe in Betracht, insbesondere auf Faser- und/oder Schaumbasis, insbesondere geschäumte Elastomere, Mineralwolle, Holzfaser, Wolle, Hartschaum etc. Eine wärmedämmende Schicht kann beispielsweise direkt auf dem Schirmelement aufgebracht sein. Es ist jedoch auch denkbar, dass die Wärmedämmung ein separates Bauteil ist. Beispielsweise kann auch das Koppelteil als Wärmedämmung angesehen werden, wenn es zumindest teilweise aus einem wärmedämmenden Material gebildet ist.

In einer weiteren Ausgestaltungsvariante kann die Schirmvorrichtung aus einem Material bestehen oder ein Material aufweisen, welches für Licht transparent ist. Damit kann besonders bevorzugt ein lichtdurchlässiges aber dennoch wärmeisolierendes Material eingesetzt werden. Dies kann sich besonders dann vorteilhaft auswirken, wenn am Tag das Sonnenlicht begrenzt ist. So kann dennoch bei trüben Außenbedingungen zumindest ein Teil des Lichts durch die Schirmvorrichtung zu den Pflanzen gelangen. Dabei kann beispielsweise ein transparenter Kunststoff eingesetzt werden. Denkbar ist der Einsatz einer Luftpolsterfolie, beispielsweise aus Polyethylen. Es sind aber auch andere Kunststoffe denkbar. Beispielsweise können auch gängige Verpackungskunststoffe zum Einsatz kommen, wie Polyethylenterephthalat (PET) oder Polypropylen (PP).

Die Funktionalität der Abdeckvorrichtung kann gemäß einer vorteilhaften Weiterbildung der Erfindung dadurch erweitert werden, dass innerhalb des Aufnahmeraums zumindest eine Funktionseinheit vorgesehen ist, wobei die/eine der Funktionseinheit(en) eine Bewässerungseinheit, eine Beleuchtungseinheit, eine Heizeinheit, eine Zuführeinheit für Pflanzenschutzmittel und/oder eine Sensoreinheit umfasst. Eine Funktionseinheit kann beispielsweise eine Rohr- oder Schlauchleitung sein, die sich im Wesentlichen in einer Längsrichtung der Abdeckvorrichtung und/oder der Obstanlage erstreckt. Eine Heizeinheit kann insbesondere einen Heizdraht oder eine Infrarot-Beleuchtung umfassen. Eine Beleuchtungseinheit kann insbesondere einen LED-Streifen umfassen. Bevorzugt kann die Beleuchtungseinheit ein Lichtspektrum mit dem Pflanzenwachstum förderlichen UV-Bestandteilen aufweisen.

Um ein einfaches Verstauen der Schirmvorrichtung, einen ungehinderten Zugriff auf die Obstanlage und/oder eine minimale Abschattung der Obstanlage zu erreichen, kann eine vorteilhafte Ausgestaltung der Erfindung derart sein, dass die Abdeckvorrichtung eine Verstellvorrichtung aufweist, die dazu ausgebildet ist, eine Verstellung der Schirmvorrichtung und/oder der Hebevorrichtung in horizontaler Richtung zu bewirken, zu unterstützen oder zumindest zu ermöglichen. Auf dieser Weise kann die Schirmvorrichtung beispielsweise aus einer Arbeitsposition, in der sie die Pflanzen in ihrem Aufnahmeraum aufnimmt, mittels der Hebevorrichtung nach oben in eine erste Verstellposition verfahren werden. Ausgehend hiervon kann eine horizontale Verstellung in eine zweite Verstellposition mittels der Verstellvorrichtung vorgenommen werden. Bereits in dieser zweiten Verstellposition kann die Zugänglichkeit der Obstanlage erheblich verbessert sein, da die Schirmvorrichtung nicht direkt über der Obstanlage vorliegt, sondern in einer Richtung vorzugsweise quer zu der Längsrichtung der Obstanlage versetzt dazu. Eine weitere Verbesserung lässt sich erreichen, wenn die Schirmvorrichtung aus dieser zweiten Verstellposition wiederum abgesenkt wird, insbesondere bis oder nahezu bis auf den Boden. Dann kann eine Abschattung minimiert werden.

Das Anheben und Absenken der Schirmvorrichtung kann auf konstruktiv einfache und zuverlässige Weise erreicht werden, wenn die Hebevorrichtung ein Tragelement aufweist, das dazu ausgebildet ist, oberhalb der Obstanlage gegenüber zumindest einer Stützstelle einer übergeordneten Struktur mittelbar oder unmittelbar abgestützt zu werden, wenn die Hebevorrichtung ferner ein Zugmittel aufweist, mittels dessen die Schirmvorrichtung an dem Tragelement aufhängbar ist, und wenn die Hebevorrichtung dazu ausgebildet ist, das Anheben und Absenken der Schirmvorrichtung durch eine Veränderung einer Traglänge des Zugmittels zwischen der Schirmvorrichtung und dem Tragelement zu ermöglichen. Das Zugmittel kann beispielswiese ein Band, ein Seil, eine Schnur oder dergleichen sein. Die übergeordnete Struktur kann beispielsweise Teil eines Gewächshauses, Folientunnels oder dergleichen sein.

Zur Veränderung der Traglänge des Zugmittels kann es insbesondere vorgesehen sein, dass das Tragelement dazu ausgebildet ist, um seine Längsachse drehbar abgestützt zu werden, und dass die Hebevorrichtung dazu ausgebildet ist, durch eine Drehung des Tragelements um seine Längsachse die Veränderung der Traglänge des Zugmittels zu ermöglichen.

Eine besonders komfortable Verwendung der Abdeckvorrichtung kann erreicht werden, wenn die Hebevorrichtung einen Antrieb aufweist, der dazu ausgebildet ist, die Veränderung der Traglänge des Zugmittels zu bewirken. Hierbei kann der Antrieb einen elektrisch ansteuerbaren Antrieb aufweisen. In diesem Fall kann das Absenken und Anheben automatisiert vorgenommen werden. Beispielsweise kann eine Steuerungseinrichtung vorgesehen sein, die auf Basis beispielsweise von Umgebungsdaten wie Temperatur, Luftfeuchtigkeit, Einstrahlungsintensität, und/oder von anderen Daten wie Uhrzeit und vorzugsweise Datum eine Ansteuerung des Antriebs vornimmt. Denkbar ist jedoch auch ein manueller Antrieb, insbesondere ein manuell zu betätigender mechanischer Antrieb.

Es kann insbesondere vorgesehen sein, dass der Antrieb dazu ausgebildet ist, das Tragelement um seine Längsachse zu drehen.

Eine leichte und dennoch steife Gestaltung des Tragelements lässt sich erreichen, wenn das Tragelement ein Hohlprofil aufweist, insbesondere als Hohlprofil ausgebildet ist. Ein Tragelement kann eine erhebliche Länge aufweisen, die demnach einem Transport zu einem Einsatzort hinderlich sein kann. Wenn jedoch vorgesehen ist, dass das Tragelement entlang seiner Mittellängsachse bevorzugt mehrere Hohlprofil-Segmente aufweist, die miteinander form-, kraft- und/oder stoffschlüssig verbunden sind, können die Segmente unproblematisch zu einem geplanten Einsatzort der Abdeckvorrichtung verbracht und dort zusammengefügt werden.

Gemäß einer vorteilhaften Weiterbildung der Erfindung wird vorgeschlagen, dass ein Koppelteil vorgesehen ist, das dazu ausgebildet ist, die Schirmvorrichtung gegenüber der Schwerkraft abzustützen. Das Koppelteil kann als Rahmen ausgebildet sein, der sich im Wesentlichen horizontal erstreckt. Ein Rahmen kann gegenüber einem plattenförmigen Teil ein geringeres Gewicht bei vergleichbaren Außenabmaßen aufweisen. Zwecks eines geringen Gewichts kann alternativ oder zusätzlich auch vorgesehen sein, dass das Koppelteil als Schaumelement ausgebildet ist, vorzugsweise aus verfestigtem Schaum von Polyvinylchlorid, Polystyrol oder Polyurethan, insbesondere aus extrudiertem Polystyrol (XPS). Somit können sich auch wärmedämmende Eigenschaften des Koppelteils ergeben. Gemäß einer besonders bevorzugten Variante kann das Koppelteil als Schaumplatte ausgebildet sein.

Das Koppelteil weist dabei in seiner horizontalen Erstreckung eine Breite auf. Diese Breite kann dabei zumindest 80% der Breite des Trägers der Obstanlage betragen. Bevorzugt beträgt die Breite des Koppelteils 90%, besonders bevorzugt 100%, weiter bevorzugt 110% und weiter bevorzugt 120% der Breite des Trägers der Obstanlage.

Die strukturelle Steifigkeit des Koppelteils kann auf vorteilhafte Weise ausgenutzt werden, indem ihm neben der Aufgabe, die Schirmvorrichtung gegenüber der Schwerkraft abzustützen, auch die Aufgabe zugeordnet wird, die oder zumindest eine der Funktionseinheit(en) zu halten, wobei das Koppelteil entsprechend ausgebildet ist, beispielsweise geeignete Halteeinrichtungen für die Funktionseinheit(en) aufweist.

Ein geringer Teileaufwand lässt sich erzielen, wenn vorgesehen ist, dass die Schirmvorrichtung dazu ausgebildet ist, eine Mehrzahl von Pflanzen zumindest teilweise von oben und den Seiten abzudecken. Hierbei kann insbesondere eine Mehrzahl von Pflanzen, die in einer Reihe aneinandergereiht sind, beispielsweise mehrere Pflanzen oder alle Pflanzen einer Stellage-Obstanlage. Insbesondere kann vorgesehen sein, dass die Schirmvorrichtung in einer Längsrichtung, die parallel zu der Längsachse des Tragelements ausgerichtet ist, eine Länge von zumindest 1 m, vorzugsweise zumindest 10 m, insbesondere zumindest 20 m aufweist.

Die die Obstanlage betreffende Aufgabe wird mit einer Obstanlage gemäß Anspruch 15 gelöst. Demnach ist vorgesehen, dass die Obstanlage mit einer Abdeckvorrichtung nach einem der Ansprüche 1 bis 14 ausgestattet ist.

Dabei kann in einer bevorzugten Ausgestaltungsvariante eine Durchführung in einem Topf der Obstanlage angeordnet sein. Die Durchführung kann in Form eines Schlitzes in den Topf eingebracht sein. Bevorzugt besteht der Topf aus zwei Querseiten und zwei Längsseiten, sodass sich die Form einer Rinne ergibt, wobei besonders bevorzugt die Querseiten in ihrer Horizontalerstreckung kürzer sein können als die Längsseiten. Vorzugsweise können mehrere Töpfe entlang einer Richtung parallel zu den Längsseiten aneinandergereiht werden, wobei sich Querseiten von benachbarten Töpfen gegenüberliegen können. Mit anderen Worten können die Töpfe mit ihren Querseiten aneinandergereiht werden, wobei ein Abstand zwischen den Querseiten vorgesehen sein kann. Wenn nun eine Durchführung, insbesondere ein Schlitz, in zumindest eine Seite, bevorzugt eine Querseite, des Topfes eingebracht wird, kann dort ein Heizelement, insbesondere ein Heizkabel, durchgeführt werden. Wenn mehrere Töpfe aneinandergereiht werden und die Durchführungen dabei in Flucht zueinander stehen, kann das Heizelement durch die gesamte Anordnung der Töpfe zuverlässig hindurchgeführt werden. Dabei kann das Heizelement die Wärme direkt an das Substrat, insbesondere die Erde, der Pflanze abgeben. Dies kann den Frühreifeprozess der Pflanzen unterstützen.

Denkbar ist jedoch auch auf die Durchführung zu verzichten und das Heizelement auf der Oberfläche der Querseite abzulegen. Mit anderen Worten kann das Heizelement auch einfach auf einem oberen Rand des Topfs (der von der Oberfläche der Querseite gebildet sein kann) im Bereich der Querseite abgelegt werden.

Die Erfindung wird im Folgenden anhand der Figuren näher beschrieben. Es zeigen:
- Figur 1:: eine schematische perspektivische Ansicht einer Obstanlage mit einer Gießanordnung,
- Figur 2:: eine schematische perspektivische Ansicht einer Wasserbereitstellungsvorrichtung einer Gießanordnung,
- Figur 3:: eine weitere schematische perspektivische Ansicht einer Obstanlage mit einer Gießanordnung,
- Figur 4:: eine schematische Darstellung einer Obstanlage mit einer Abdeckvorrichtung,
- Figur 5:: eine schematische Darstellung einer Ausgestaltung eines Koppelteils einer Abdeckvorrichtung,
- Figur 6:: eine schematische Seitenansicht einer Obstanlage mit einer Abdeckvorrichtung,
- Figur 7:: eine schematische Schnittansicht von Segmenten eines Tragelements einer Hebevorrichtung einer Abdeckvorrichtung,
- Figur 8:: eine schematische Schnittansicht einer weiteren Ausgestaltung von Segmenten eines Tragelements und
- Figur 9:: eine Detaildarstellung IX der Abdeckvorrichtung nach Figur 4.

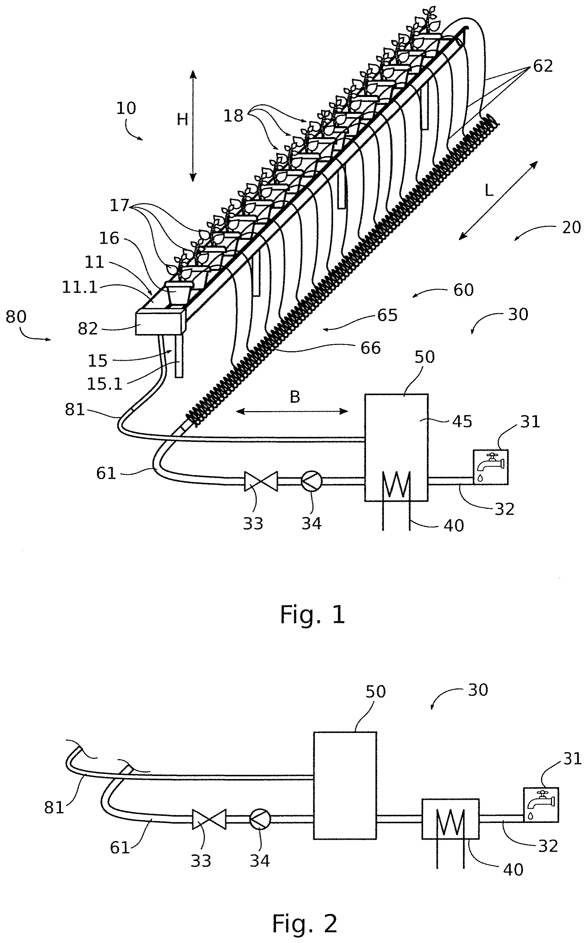

In Figur 1 ist in schematischer perspektivischer Ansicht eine Obstanlage 10 zu sehen. Die Obstanlage 10 kann mehrere Pflanzen 17 umfassen, die wie vorliegend vorzugsweise in einer Längsrichtung L aneinandergereiht vorgesehen sein können. Bei den Pflanzen 17 kann es sich insbesondere um Obstpflanzen handeln, bevorzugt Beerenobst, insbesondere Erdbeeren. Wie anhand der Figur 1 zu erkennen ist, können einzelne Pflanzen 17 jeweils in einem Topf 16 aufgenommen sein, der ein geeignetes Substrat enthält. Denkbar ist auch, dass mehrere Pflanzen 17 in einem größeren Topf 16, beispielsweise einem Kasten, aufgenommen sind, in dem sie entlang der Längsrichtung L aneinandergereiht sind, wobei in diesem Fall auch mehrere Kästen aneinandergereiht sein können. Alternativ ist vorstellbar, dass die Pflanzen 17 auf andere Weise in einem Substrat aufgenommen sind, beispielsweise in Substratsäcken.

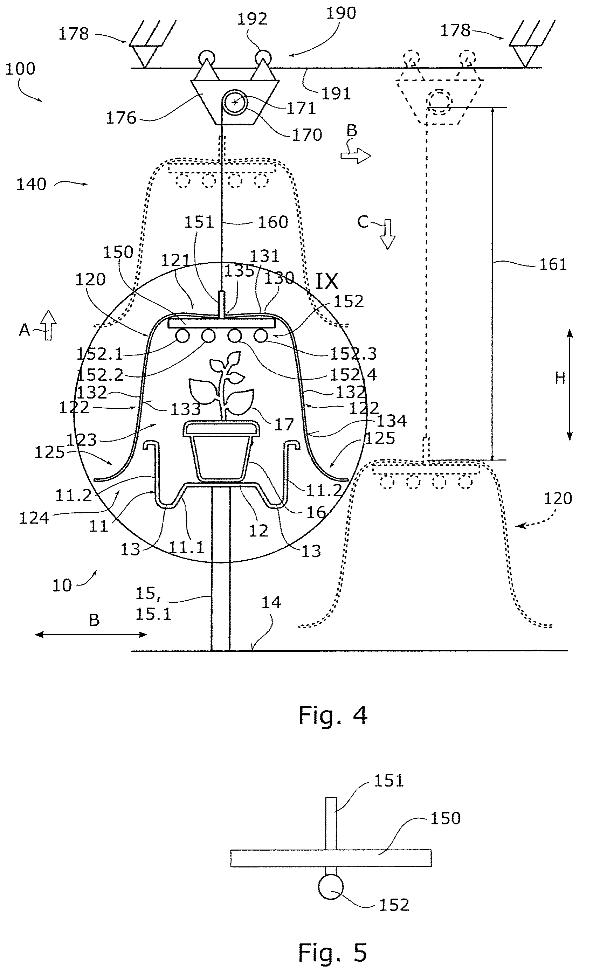

Die Pflanzen 17 können von einem Träger 11 aufgenommen sein, der wie vorliegend als Rinne 11.1 ausgestaltet sein kann. Die Rinne 11.1 kann entlang der Längsrichtung L im Wesentlichen einen konstanten Querschnitt aufweisen. Somit kann die Rinne 11.1 insbesondere als extrudiertes Profil oder als gewalztes Profil hergestellt sein. In Figur 4 ist ein beispielhafter Querschnitt einer Rinne 11.1 zu erkennen. Demnach kann die Rinne 11.1 einen bezüglich einer senkrecht zur Längsrichtung L stehenden Breitenrichtung B mittig angeordneten Aufstellbereich 12 aufweisen. Auf dem Aufstellbereich 12 können die Pflanzen 17, beispielsweise unter Vermittlung der Töpfe 16, aufgestellt sein. In Breitenrichtung B an den Aufstellbereich 12 angrenzend kann beiderseits ein Ablaufbereich 13 vorgesehen sein. Wie vorliegend kann der Ablaufbereich 13 gegenüber dem Aufstellbereich 12 in Schwerkraftrichtung vertieft ausgestaltet sein, sodass Wasser aus dem Aufstellbereich 12 und/oder aus dem Substrat der Pflanzen 17 in den Ablaufbereich 13 ablaufen kann. Die Rinne 11 kann ferner bezüglich der Breitenrichtung B außen durch einander gegenüberliegende Seitenwände 11.2 begrenzt sein. Beispielsweise können sich die Seitenwände 11.2 im Wesentlichen in einer vertikalen Höhenrichtung H und in Längsrichtung L erstrecken. Die Höhenrichtung H kann senkrecht zu der Längsrichtung L und der Breitenrichtung B stehen.

Der Träger 11 kann beispielsweise auf einem Gestell 15 gegenüber dem Boden 14 abgestützt sein. Wie vorliegend kann das Gestell 15 mehrere Ständer 15.1 umfassen. Denkbar ist auch, dass der Träger 11 an einer übergeordneten Struktur, beispielsweise einem Gewächshaus oder dergleichen, abgestützt ist, beispielsweise abgehängt.

In Figur 1 ist weiter zu erkennen, dass der Obstanlage 10 eine Gießanordnung 20 zugeordnet sein kann. Die Gießanordnung 20 kann eine Wasserbereitstellungsvorrichtung 30 und eine Wasserverteilungsvorrichtung 60 aufweisen.

Die Wasserbereitstellungsvorrichtung 30 kann dazu ausgebildet sein, Gießwasser zum Gießen der Pflanzen 17 der Obstanlage 10 bereitzustellen. Die Wasserbereitstellungsvorrichtung 30 kann mit einer Wasserquelle 31 verbunden sein, über welche der Wasserbereitstellungsvorrichtung 30 Wasser zugeführt werden kann, welches als Gießwasser dienen kann. Wie vorliegend kann es sich bei der Wasserquelle 31 beispielsweise um einen Anschluss einer Wasserleitung handeln, insbesondere eine Auslaufarmatur wie einen Wasserhahn. An die Wasserquelle 31 kann eine Anschlussleitung 32 der Wasserbereitstellungsvorrichtung 30 angeschlossen sein.

Wie aus Figur 1 weiter hervorgeht, kann die Wasserbereitstellungsvorrichtung 30 eine Speichereinrichtung 50 aufweisen. In dieser kann Gießwasser, welches der Wasserquelle 31 entnommen wurde, gespeichert werden. Beispielsweise kann die Speichereinrichtung 50 an die Anschlussleitung 32 angeschlossen sein. In der Ausgestaltung gemäß Figur 1 ist die Speichereinrichtung 50 Teil eines Speichererhitzers 45. Neben der Speichereinrichtung 50 weist der Speichererhitzer eine Heizeinrichtung 40 auf. Somit kann mittels des Speichererhitzers 45 das Gießwasser erhitzt und gespeichert werden.

In Figur 2 ist eine alternative Ausgestaltung der Wasserbereitstellungsvorrichtung 30 dargestellt. Dementsprechend kann die Heizeinrichtung 40 auch separat von der Speichereinrichtung 50 vorgesehen sein. Vorzugsweise kann die Heizeinrichtung 40 gemäß Figur 2 als Durchlauferhitzer vorgesehen sein. Der Durchlauferhitzer kann beispielsweise mit der Anschlussleitung 32 verbunden sein. Weiterhin unter Bezugnahme auf Figur 2 kann vorgesehen sein, dass das von der Wasserquelle 31 entnommene und mittels der Heizeinrichtung 40 beheizte Gießwasser in eine separate Speichereinrichtung 50 geleitet und dort gespeichert werden kann.

Die Gießanordnung 20 kann ferner eine Wasserverteilungsvorrichtung 60 aufweisen, wie dies in Figur 1 dargestellt ist. Die Wasserverteilungsvorrichtung 60 kann dazu dienen, das von der Wasserbereitstellungsvorrichtung 30 bereitgestellte Gießwasser an zumindest einen Gießort 18 zu leiten. Ein Gießort 18 kann insbesondere eine Pflanze 17 der Obstanlage 10 umfassen. Wie in Figur 1 zu sehen, kann vorgesehen sein, dass jede Pflanze 17 einen Gießort 18 bildet.

Die Gießanordnung 20 kann eine Gieß-Vorlaufleitung 61 aufweisen, die beispielsweise mit einem ersten Leitungsende an die Speichereinrichtung 50 angeschlossen ist, und deren anderes Leitungsende in der Nähe der Gießorte 18 vorgesehen ist. Wie aus den Figuren 1 und 2 hervorgeht, kann eine Fördereinrichtung 34 vorgesehen sein, die dazu ausgebildet ist, das bereitgestellte Gießwasser aus der Speichereinrichtung 50 durch die Gieß-Vorlaufleitung 61 zu fördern. Die Fördereinrichtung 34 kann beispielsweise zwischen Speichereinrichtung 50 und Gieß-Vorlaufleitung 61 vorgesehen sein. Insbesondere kann als Fördereinrichtung 34 eine Pumpe vorgesehen sein.

Je nach Gegebenheiten am Einsatzort kann es denkbar sein, auf eine Fördereinrichtung 34 im Bereich der Gieß-Vorlaufleitung 61 zu verzichten. Beispielsweise kann die Speichereinrichtung 50 auf einer geodätisch höheren Lage vorgesehen sein als die Gießorte 18, sodass allein der geodätische Druckunterschied eine Förderung des bereitgestellten Gießwassers durch die Gieß-Vorlaufleitung 61 bewirken kann. In diesem Fall kann jedoch eine der Speichereinrichtung 50 vorgeschaltete Fördereinrichtung notwendig sein, um das der Wasserquelle 31 entnommene Wasser auf dieses geodätisch höhere Niveau zu fördern.

Wie den Figuren 1 und 2 weiter zu entnehmen ist, kann eine Absperreinrichtung 33 vorgesehen sein, die eine Förderung von Gießwasser in die Gieß-Vorlaufleitung 61 wahlweise blockieren oder zulassen kann. Beispielsweise kann es sich hierbei um einen Hahn oder ein Ventil handeln. Insbesondere kann die Absperreinrichtung 33 zwischen der Speichereinrichtung 50 und der Gieß-Vorlaufleitung 61 geschaltet sein, vorzugsweise in Strömungsrichtung nach der Fördereinrichtung 34.

Wie in Figur 1 zu sehen ist, kann der Wasserverteilungsvorrichtung 60 eine Temperaturhalteeinrichtung 65 zugeordnet sein. Die Temperaturhalteeinrichtung 65 kann dazu dienen, einem Abfall der Temperatur des beheizten Gießwassers auf dem Weg zwischen Speichereinrichtung 50 und Gießort(en) 18 entgegenzuwirken. Die Temperaturhalteeinrichtung 65 kann insbesondere eine Wärmeisolierung und/oder eine Zuheizeinrichtung 66 umfassen.

Vorzugsweise kann die Temperaturhalteeinrichtung 65 der Gieß-Vorlaufleitung 61 zugeordnet sein. Insbesondere kann vorgesehen sein, dass die Temperaturhalteeinrichtung 65 eine Wärmeisolierung umfasst, die die Gieß-Vorlaufleitung 61 gegenüber der Umgebung isoliert.

Die Gieß-Vorlaufleitung 61 kann insbesondere einen Schlauch oder eine Rohrleitung aufweisen, vorzugsweise als Schlauch, Rohrleitung oder eine Kombination daraus ausgebildet sein. In diesem Fall kann die Temperaturhalteeinrichtung 65 somit eine Wärmeisolierung sein, die die Gieß-Vorlaufleitung 61 zumindest bereichsweise als Rohr- bzw. Schlauchisolierung umgibt. Vorzugsweise kann ein wesentlicher Teil der Länge der Gieß-Vorlaufleitung 61 mit der Wärmeisolierung versehen sein, beispielsweise die komplette Länge, mindestens 90 % der Länge, mindestens 80 % der Länge, oder zumindest die Hälfte der Länge.

Wie bereits erwähnt, kann die Temperaturhalteeinrichtung 65 alternativ oder zusätzlich eine Zuheizeinrichtung 66 aufweisen. Wie in Figur 1 dargestellt, kann es sich bei der Zuheizeinrichtung 66 um eine Begleitheizung handeln. Vorzugsweise kann ein wesentlicher Teil der Länge der Gieß-Vorlaufleitung 61 mit der Begleitheizung versehen sein, beispielsweise die komplette Länge, mindestens 90 % der Länge, mindestens 80 % der Länge, oder zumindest die Hälfte der Länge.

Alternativ oder zusätzlich ist auch denkbar, dass die Zuheizeinrichtung 66 einen Durchlauferhitzer umfasst, der an geeigneter Stelle der Gieß-Vorlaufleitung 61 zwischengeschaltet ist.

An die Gieß-Vorlaufleitung 61 können Bewässerungselemente 62 angeschlossen sein, wie dies in Figur 1 zu sehen ist. Die Bewässerungselemente 62 können dazu dienen, das Gießwasser von der Gieß-Vorlaufleitung 61 zu den Gießorten 18 zu leiten. Wie vorliegend können die Bewässerungselemente 62 schlauchartig ausgebildet sein. Vorzugweise können die Bewässerungselemente 62 an ihren der Gieß-Vorlaufleitung 61 abgewandten Enden im Bereich der Gießorte (18) jeweils ein Tropfelement aufweisen, um eine Tröpfchenbewässerung zu ermöglichen oder zu erleichtern. Gemäß der in den Figuren gezeigten Ausgestaltung kann für jeden Gießort 18, insbesondere für jede Pflanze 17 der Obstanlage 10, ein Bewässerungselement 62 vorgesehen sein.

Das von den Bewässerungselementen 62 an die Gießorte 18 bzw. Pflanzen 17 geleitete Gießwasser kann zumindest teilweise in der Rinne 11.1 gesammelt werden, insbesondere zu einem Teil, der weder von den Pflanzen 17 oder deren Substrat aufgenommen wird noch verdunstet. Vorzugsweise sammelt sich dieses überschüssige Gießwasser in dem Ablaufbereich 13 der Rinne 11.1. Die Rinne 11.1 kann beispielsweise entlang der Längsrichtung L ein Gefälle aufweisen, sodass das Gießwasser zu einem längsseitigen Ende der Rinne 11.1 geleitet wird.

Die Gießanordnung 20 kann zur Wiederverwendung dieses überschüssigen Gießwassers eine Wasserrückführvorrichtung 80 aufweisen. Wie in Figur 1 zu erkennen ist, kann die Wasserrückführvorrichtung 80 eine Fangvorrichtung 82 aufweisen, die beispielsweise an dem zuvor erwähnten längsseitigen Ende der Rinne 11.1 vorgesehen sein kann. Die Fangvorrichtung 82 kann dazu dienen, das in der Rinne 11.1, insbesondere in dem Ablaufbereich 13 der Rinne 11.1 abgelaufene Wasser in eine Wasserrückführleitung 81 einzuleiten. Die Wasserrückführleitung 81 kann beispielsweise an die Speichereinrichtung 50 angeschlossen sein, sodass das von der Fangvorrichtung 82 eingesammelte überschüssige Gießwasser über die Wasserrückführleitung 81 in die Speichereinrichtung 50 zurückgeführt werden kann, und somit weiterverwendet werden kann.

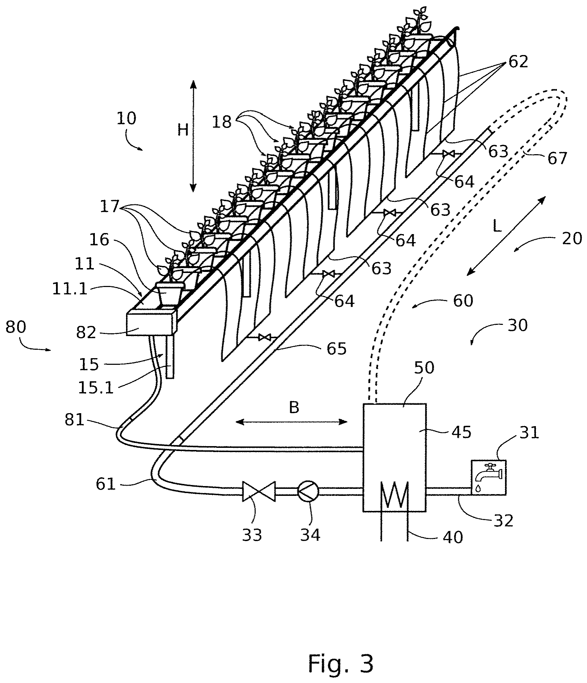

In Figur 3 ist eine weitere Ausgestaltung einer Gießanordnung 20 zu sehen. Diese weist eine Vielzahl von Übereinstimmungen mit der Gießanordnung 20 gemäß Figur 1 auf, sodass auf diese Bezug genommen und im Folgenden nur auf die Unterschiede eingegangen wird.

Wie in Figur 3 zu erkennen ist, kann vorgesehen sein, dass die Wasserverteilungsvorrichtung 60 mindestens einen Verteiler 63 aufweist. Der Verteiler 63 kann dazu dienen, mehrere Bewässerungselemente 62 gemeinsam mit der Gieß-Vorlaufleitung 61 zu verbinden. Beispielsweise können jeweils vier Bewässerungselemente 62 mit einem Verteiler 63 verbunden sein. Der Verteiler 63 kann diese vier Bewässerungselemente 62 mit der Gieß-Vorlaufleitung 61 verbinden.

Vorzugsweise kann es vorgesehen sein, dass die Verteiler 63 hierbei unter Zwischenschaltung eines Absperrorgans 64 an die Gieß-Vorlaufleitung 61 angeschlossen sind. Das Absperrorgan 64 kann beispielsweise ein Hahn oder ein Ventil sein.

Natürlich können auch bei einer Gießanordnung 20 gemäß Figuren 1 Verteiler 63 und Absperrorgane 64 gemäß Figur 3 vorgesehen werden.

Wie in Figur 3 zu erkennen ist, kann die Gießanordnung 20 eine Gieß-Rücklaufleitung 67 aufweisen. Die Gieß-Rücklaufleitung 67 kann dazu ausgebildet sein, Gießwasser von der Gieß-Vorlaufleitung 61 zumindest teilweise zu der Wasserbereitstellungsvorrichtung 30 zurückzuführen. Wie vorliegend kann es beispielsweise vorgesehen sein, dass die Gieß-Rücklaufleitung 67 an die Gieß-Vorlaufleitung 61 an deren der Wasserbereitstellungsvorrichtung 30 abgewandtem Ende angeschlossen ist. Die Gieß-Rücklaufleitung 67 kann insbesondere zu der Speichereinrichtung 50 zurückführen. Demnach kann Gießwasser von der Gieß-Vorlaufleitung 61 über die Gieß-Rücklaufleitung 67 in die Speichereinrichtung 50 zurückgeführt werden.

Wenn eine Gieß-Rücklaufleitung 67 vorgesehen ist, kann ein zumindest teilweiser Zirkulationsbetrieb vorgesehen sein. Demnach kann Gießwasser von der Speichereinrichtung 50, beispielsweise unter Förderung durch die Fördereinrichtung 34, durch die Gieß-Vorlaufleitung 61 und über die Bewässerungselemente 62 zumindest teilweise zu den Gießorten 18 gefördert werden. Hierbei kann insbesondere vorgesehen sein, dass nicht das gesamte Gießwasser, das in die Gieß-Vorlaufleitung 61 eingeleitet wird, auch an die Gießorte 18 gefördert wird, sondern ein Teil über die Gieß-Rücklaufleitung 67 zurück zu der Speichereinrichtung 50 gefördert wird.

Grundsätzlich kann eine Ausgestaltung der Gießanordnung 20 gemäß Figur 3 selbstverständlich ebenfalls eine Temperaturhalteeinrichtung 65 aufweisen, wie dies zuvor zu den Figuren 1 und 2 beschrieben wurde. Jedoch kann mit einer Gießanordnung 20 gemäß Figur 3 gegebenenfalls auch ohne eine Temperaturhalteeinrichtung 65 ein allenfalls geringer Temperaturabfall des Gießwassers während des Transports von der Wasserbereitstellungsvorrichtung 30 zu den Gießorten 18 erreicht werden. So kann mittels des oben beschriebenen Zirkulationsbetriebs eine vergleichsweise große Gießwassermenge im Umlauf sein. Hiermit kann einerseits eine vergleichsweise große Wärmekapazität im Leitungssystem, insbesondere in der Gieß-Vorlaufleitung 61, vorgehalten sein, die ein Abkühlen verlangsamt. Ferner kann auch eine vergleichsweise große Umlaufgeschwindigkeit vorgesehen sein, sodass das Gießwasser nur kurze Zeit in der Gieß-Vorlaufleitung 61 verweilt, bevor es an den Gießort 18 verbracht wird oder über die Gieß-Rücklaufleitung 67 zur erneuten Beheizung zurückgeführt wird.

Vorzugsweise kann jedoch zumindest eine Wärmeisolierung der Gieß-Vorlaufleitung 61 und/oder der Gieß-Rücklaufleitung 67 vorgesehen sein, um unnötige Wärmeverluste zu verhindern und somit den Energiebedarf der Heizeinrichtung 40 zu reduzieren.

Bezugnehmend auf die Figuren 1 und 2 soll nun eine erste bevorzugte Vorgehensweise zur Bewässerung von Pflanzen 17 einer Obstanlage 10 vorgestellt werden. Hierbei kann zunächst mittels einer Heizeinrichtung 40, beispielsweise mittels der Heizeinrichtung 40 des Speichererhitzers 45 gemäß Figur 1 oder mittels des Durchlauferhitzers 41 gemäß Figur 2 eine Menge an Gießwasser beheizt werden, die vorher beispielsweise einer Wasserquelle 31 entnommen wurde. Die beheizte Menge an Gießwasser kann dann in einer Speichereinrichtung 50, beispielsweise der Speichereinrichtung 50 des Speichererhitzers 45 gemäß Figur 1 oder in der separaten Speichereinrichtung 50 gemäß Figur 2 gespeichert werden. Beispielsweise kann das beheizte Gießwasser gespeichert werden, bis das Gießwasser zu den Gießorten 18 geführt werden soll und/oder auch während Führens des Gießwassers zu den Gießorten 18. Das beheizte Gießwasser kann nun zu den Gießorten 18 geführt werden, beispielsweise mittels der Fördereinrichtung 34 in die Gieß-Vorlaufleitung 61 gefördert werden, die das Gießwasser in Richtung Gießorte 18 führt, insbesondere auch über die Bewässerungselemente 62. Hierbei kann die Speichereinrichtung 50 entleert werden. Besonders vorteilhaft kann hierbei das Gießwasser während des Transports von der Speichereinrichtung 50 zu den Gießorten 18 weiter beheizt werden, insbesondere mittels der Zuheizeinrichtung 66. Wenn die Speichereinrichtung 50 entleert ist, oder ein vorbestimmter Mindestinhalt der Speichereinrichtung 50 erreicht ist, kann der Bewässerungsvorgang beendet sein. Selbstverständlich kann der beschriebene Vorgang bei Bedarf wiederholt werden.

Bezugnehmend auf die Figur 3 soll nun eine zweite bevorzugte Vorgehensweise zur Bewässerung von Pflanzen 17 einer Obstanlage 10 vorgestellt werden. Hierbei kann wiederum zunächst mittels einer Heizeinrichtung 40, beispielsweise mittels der Heizeinrichtung 40 des Speichererhitzers 45 gemäß Figur 3 eine Menge an Gießwasser beheizt werden, die vorher beispielsweise einer Wasserquelle 31 entnommen wurde. Die beheizte Menge an Gießwasser kann dann in einer Speichereinrichtung 50, beispielsweise der Speichereinrichtung 50 des Speichererhitzers 45, gespeichert werden. Beispielsweise kann das beheizte Gießwasser gespeichert werden, bis das Gießwasser zu den Gießorten 18 geführt werden soll und/oder auch während des Führens des Gießwassers zu den Gießorten 18. Das beheizte Gießwasser kann nun zu den Gießorten 18 geführt werden, beispielsweise mittels der Fördereinrichtung 34 in die Gieß-Vorlaufleitung 61 gefördert werden, die das Gießwasser in Richtung Gießorte 18 führt, insbesondere auch über die Bewässerungselemente 62. Hierbei kann insbesondere nicht das gesamte Gießwasser, das in die Gieß-Vorlaufleitung 61 eingeleitet wird, auch an die Gießorte 18 gefördert werden, sondern ein Teil über die Gieß-Rücklaufleitung 67 zurück zu der Speichereinrichtung 50 gefördert werden. Demnach kann ein Zirkulationsbetrieb vorgesehen sein, der aufrechterhalten werden kann, solange die Gießorte 18 mit Gießwasser versorgt werden sollen. Denkbar ist, dass auch nach Ende des Bewässerungsvorgangs der Zirkulationsbetrieb aufrechterhalten wird, wobei die Absperrorgane 64 geschlossen sind, sodass Gießwasser über Gieß-Vorlaufleitung 61 Speichereinrichtung 50 und Gieß-Rücklaufleitung 67 kontinuierlich zirkuliert wird. Auf diese Weise können die Pflanzen mit abgestrahlter und/oder konvektierter Wärme durch die Gieß-Vorlaufleitung 61 und die Gieß-Rücklaufleitung 67 versorgt werden. Ferner kann sichergestellt sein, dass bei einem erneuten Bewässerungsvorgang bereits warmes Gießwasser im Bereich der Gießorte 18 vorliegt. Wenn erneut die Gießorte 18 mit Gießwasser versorgt werden sollen, können die Absperrorgane 64 erneut geöffnet werden.

Unter Bezugnahme auf die Figuren 4 bis 9 wird im Folgenden eine Abdeckvorrichtung 100 für eine Obstanlage 10 beschrieben. Selbstverständlich kann an einer Obstanlage 10 eine Abdeckvorrichtung 100 und eine Gießanordnung 20 wie zuvor beschrieben vorgesehen sein.

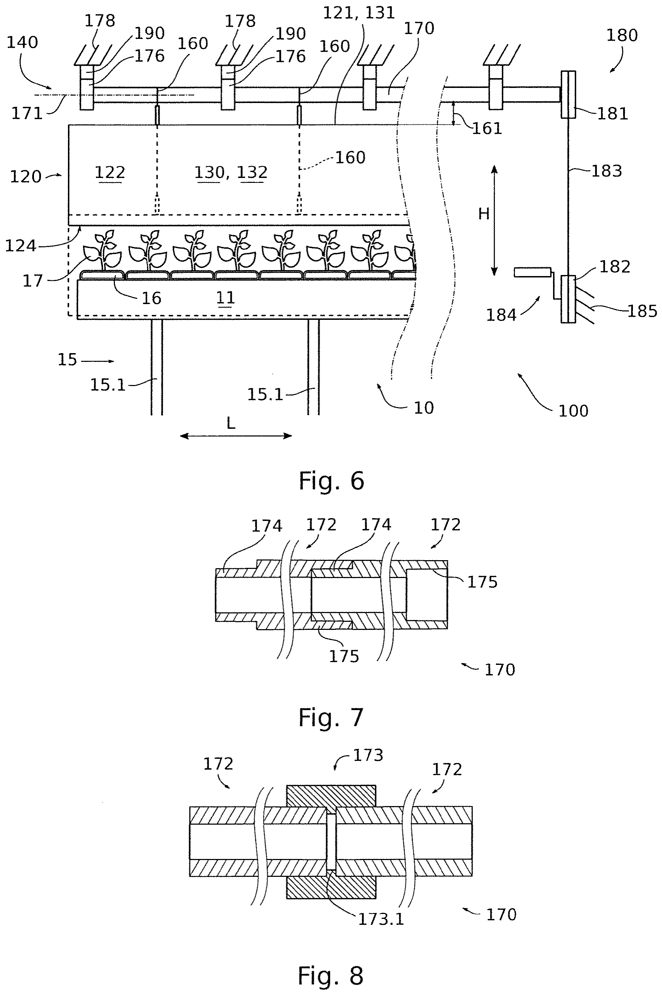

Die in den Figuren 4 und 6 dargestellte Obstanlage 10 entspricht im Wesentlichen den zuvor beschriebenen Obstanlagen 10 gemäß den Figuren 1 und 3, sodass auf die diesbezüglichen Ausführungen Bezug genommen wird.

Wie nun in Figur 4 zu sehen ist, weist die Abdeckvorrichtung 100 eine Schirmvorrichtung 120 auf. Die Schirmvorrichtung 120 kann zur zumindest teilweisen Abdeckung zumindest einer Pflanze 17 der Obstanlage 10 von oben und von zwei gegenüberliegenden Seiten dienen. Wie in Figur 6 gut zu erkennen ist, kann die Schirmvorrichtung 120 dazu ausgebildet sein, eine Mehrzahl der aneinandergereihten Pflanzen 17 der Obstanlage 10 von oben und zwei Seiten abzudecken.

In Figur 4 ist weiter zu erkennen, dass die Schirmvorrichtung 120 einen oberen Abdeckbereich 121 und zwei einander gegenüberliegende seitliche Abdeckbereiche 122 aufweist, die jeweils im Wesentlichen die Abdeckung von oben bzw. von den Seiten bereitstellen. Innerhalb der Schirmvorrichtung 120, insbesondere in dem von dem oberen Abdeckbereich 121 und den seitlichen Abdeckbereichen 122 umgrenzten Raum, kann die Schirmvorrichtung 120 einen Aufnahmeraum 123 bilden. Wie in Figur 4 gut zu erkennen ist, kann der Aufnahmeraum 123 dazu ausgebildet sein, die Pflanze 17 bzw. die Pflanzen 17 zumindest teilweise, vorliegend vollständig aufzunehmen. Unterseitig kann an der Schirmvorrichtung 120 eine unterseitige Öffnung 124 vorgesehen sein, die einen Zugang zu dem Aufnahmeraum 123 schafft. Die unterseitige Öffnung 124 kann dazu dienen, die Schirmvorrichtung 120 von oben über die Pflanze 17 abzusenken, um somit die Abdeckung von oben und den Seiten zu erreichen. Zum Anheben und Absenken der Schirmvorrichtung 120 kann eine Hebevorrichtung 140 vorgesehen sein, auf die weiter unten näher eingegangen wird.

Wie in den Figuren dargestellt, kann die Schirmvorrichtung 120 ein flächiges Schirmelement 130 aufweisen. Das Schirmelement 130 kann vorzugsweise eine Folie aufweisen, insbesondere als Folie ausgestaltet sein. Wie insbesondere in Figur 4 zu erkennen ist, kann das Schirmelement 130 einen Oberteil 131 aufweisen, der den oberen Abdeckbereich 121 bilden kann. Es ist jedoch auch denkbar, dass der obere Abdeckbereich 121 nicht oder nur teilweise von dem Schirmelement 130 gebildet ist. Denkbar ist beispielsweise auch, dass der obere Abdeckbereich 121 von einem anderen Bauteil, insbesondere von einem Koppelteil 150 gebildet ist, auf das später näher eingegangen wird.

Das Schirmelement 130 kann ferner zwei Seitenteile 132 aufweisen, die die seitlichen Abdeckbereiche 122 bilden können. Gemäß der Darstellung in den Figuren kann das Schirmelement 130 einteilig aufgebaut sein derart, dass der Oberteil 131 und die Seitenteile 132 einteilig ineinander übergehen. Es ist jedoch denkbar, insbesondere wenn - wie zuvor erwähnt - der obere Abdeckbereich 121 von einem anderen Bauteil gebildet wird, dass die Seitenteile 132 separate Einheiten darstellen, die beispielsweise an dem Koppelteil 150 aufgehängt sind. In diesem Fall kann ein Oberteil 131 des Schirmelements 130 verzichtbar sein.

Dabei kann es so sein, dass die Seitenteile 132 den Träger 11 und insbesondere die Seitenwände 11.2 übergreifen. Dieses Übergreifen kann dabei derart sein, dass der Täger 11 bzw. die Seitenwände 11.2 in Breitenrichtung B und/oder in Höhenrichtung H zumindest teilweise von den Seitenteilen 132 überdeckt werden. Vorzugsweise kann die Überdeckung sowohl in Höhen- als auch in Breitenrichtung H, B vorgesehen sein, wie aus Figur 4 hervorgeht. Zumindest kann diese Überdeckung bereichsweise erfolgen. Wenn nun die Seitenwände 11.2 in Breitenrichtung B durch die Seitenwände 132 und/oder Auflaufbereiche 125 überdeckt sind, ergibt sich ein großzügig dimensionierter Aufnahmeraum 123 für die Pflanzen 17. Dies geht aus Figur 4 hervor und ist dadurch begründet, dass der Topf 16 mittig auf dem Träger 11 angeordnet ist und der Träger 11 in Breitenrichtung B größer dimensioniert ist als der Topf 16.

Eine Höhenerstreckung des Aufnahmeraums 123 und/oder der Seitenteile 132 kann beispielsweise etwa 30 cm betragen, was insbesondere für Erdbeerkulturen einen ausreichend dimensionierten Aufnahmeraum 123 bereitstellt.

Wie der Figur 4 weiterhin zu entnehmen ist, kann das Schirmelement 130 eine Innenseite 133 aufweisen, die zu dem Aufnahmeraum 123 hin gerichtet ist. Der Innenseite 133 gegenüberliegend kann das Schirmelement 130 eine Außenseite 134 aufweisen, die dem Aufnahmeraum 123 abgewandt ist.

Die Schirmvorrichtung 120 kann der Abschirmung der Pflanzen 17 vor Kälte dienen bzw. dazu dienen, Wärmeenergie innerhalb des Aufnahmeraums 123 zu halten. Zu diesem Zweck kann es vorteilhaft sein, wenn das Schirmelement 130 eine reflektierende Beschichtung aufweist. Beispielsweise kann hierzu eine Aluminium-Kaschierung vorgesehen sein. Insbesondere kann eine derartige Beschichtung auf der Innenseite 133 aufgebracht sein. Denkbar ist natürlich alternativ oder zusätzlich auch eine reflektierende Beschichtung auf der Außenseite 134.

Als alternative oder zusätzliche Möglichkeit, Wärmeverluste aus dem Aufnahmeraum 123 zu verringern, kann auch vorgesehen sein, dass das Schirmelement 130 eine Wärmedämmung aufweist. Hierzu kommt es insbesondere in Betracht, eine wärmedämmende Schicht, beispielsweise auf der Innenseite 133 und/oder der Außenseite 134 vorzusehen.

Um ein einfaches Absenken in Richtung der Obstanlage 10 zu ermöglichen, und insbesondere um eine Kollision der Schirmvorrichtung 120 mit den Pflanzen 17 und/oder dem Träger 11 der Obstanlage 10 zu verhindern, kann es vorgesehen sein, dass die Schirmvorrichtung 120 einen Auflaufbereich 125 aufweist, wie dies in Figur 4 zu erkennen ist. Der Auflaufbereich 125 kann eine Aufweitung des Aufnahmeraums 123 im Bereich der unterseitige Öffnung 124 darstellen. Vorzugsweise kann hierbei vorgesehen sein, dass die seitlichen Abdeckbereiche 122 in Richtung zu der unterseitigen Öffnung 124 zunehmend voneinander beabstandet vorgesehen sind. Vorzugsweise kann die Zunahme der Beabstandung wie vorliegend kontinuierlich erfolgen.

Die Auflaufbereiche 125 können von dem Schirmelement 130 im Bereich der Seitenteile 132 gebildet sein. Hierbei kann es vorgesehen sein, dass das Schirmelement 130 von sich aus eine Formgebung aufweist, die die Auflaufbereiche 125 beinhaltet. Mit anderen Worten können die Auflaufbereiche 125 als eigensteife Flächenbestandteile des Schirmelements 130 vorgesehen sein. Denkbar ist jedoch auch, dass beispielsweise Formelemente an den Seitenteilen 132 vorgesehen sind, beispielsweise auf die Außenseiten 134 und/oder Innenseiten 133 aufgebracht, insbesondere aufgeklebt sind. Die Formelemente können den Seitenteilen 132 die Form der Auflaufbereiche 125 aufprägen.

Wie weiter in Figur 4 zu sehen ist, kann innerhalb des Aufnahmeraums 123 zumindest eine Funktionseinheit 152 vorgesehen sein. In Figur 4 sind vier Funktionseinheiten 152.1-152.4 dargestellt. Bei den Funktionseinheiten 152 kann es sich um Bewässerungseinheiten, Beleuchtungseinheiten, Heizeinheiten, Zuführeinheiten für Pflanzenschutz und/oder Sensoreinheiten handeln. Beispielsweise kann die Funktionseinheit 152.1 eine Zuführeinheit für Pflanzenschutz sein. Diese kann beispielsweise eine Rohr- oder Schlauchleitung sein, die sich im Wesentlichen in Längsrichtung L erstreckt. Die Funktionseinheit 152.2 kann beispielsweise eine Heizeinheit, insbesondere einen Heizdraht oder eine Infrarot-Beleuchtung sein. Weiter ist denkbar, dass die Funktionseinheit 152.3 eine Beleuchtungseinheit aufweist, insbesondere als LED-Streifen, vorzugsweise mit einer Erstreckung im Wesentlichen in Längsrichtung L. Vorteilhaft kann die Beleuchtungseinheit ein Lichtspektrum mit für das Pflanzenwachstum geeigneten UV-Bestandteilen aufweisen. Die Funktionseinheit 152.4 kann beispielsweise einen Gießschlauch umfassen. Denkbar ist hierbei insbesondere, dass eine Gieß-Vorlaufleitung 61 oder Bewässerungselemente 62 wie in Bezug auf die Figuren 1 bis 3 beschrieben als Funktionseinheit 152.4 vorgesehen sind.

Wie in Figur 4 dargestellt, kann es vorgesehen sein, dass die Funktionseinheiten 152 an dem Koppelteil 150 gehalten sind. In Figur 5 ist zu erkennen, dass zumindest eine Funktionseinheit 152 an einem Anschlussstück 151 gehalten sein kann, insbesondere an einem Teilbereich des Anschlussstücks 151, der in Richtung Aufnahmeraum 123 das Koppelteil 150 durchragt. Das Anschlussstück 151 kann eine Verbindung zwischen dem Koppelteil 150 und einem Zugmittel 160 bilden, auf welches weiter unten näher eingegangen wird.

Wie bereits erwähnt wurde, kann die Abdeckvorrichtung 100 eine Hebevorrichtung 140 aufweisen, die zum Anheben und Absenken der Schirmvorrichtung 120 vorgesehen ist. Die Hebevorrichtung 140 kann ein Tragelement 170 aufweisen. Das Tragelement 170 kann gegenüber einer übergeordneten Struktur abgestützt sein. Die übergeordnete Struktur kann beispielsweise in Gewächshaus sein, innerhalb dessen die Obstanlage 10 sich befindet.

Wie in den Figuren 4 und 6 zu erkennen ist, kann das Tragelement 170 gegenüber Stützstellen 178 abgestützt sein, die an der übergeordneten Struktur befestigt sind und/oder Bestandteile derselben bilden. Wie vorliegend kann die Abstützung des Tragelements 170 an den Stützstellen 178 mittelbar erfolgen, beispielsweise unter Vermittlung einer Verstellvorrichtung 190, auf die unten näher eingegangen wird.

Die Hebevorrichtung 140 kann ferner ein Zugmittel 160 aufweisen. Das Zugmittel 160 kann dazu dienen, die Schirmvorrichtung 120 an dem Tragelement 170, und somit letztlich an der übergeordneten Struktur entgegen der Schwerkraft abzustützen. Wie in den Figuren 4 und 6 gut zu erkennen ist, kann das Zugmittel 160 an dem Koppelteil 150 angekoppelt sein, beispielsweise unter Vermittlung eines Anschlussstücks 151. Entlang der Längsrichtung L können in regelmäßigen oder unregelmäßigen Abständen mehrere Zugmittel 160 vorgesehen sein, wie dies in Figur 6 zu sehen ist. Bei dem Zugmittel 160 kann es sich um ein biegeschlaffes Bauteil handeln, insbesondere ein Seil, eine Schnur, eine Kette oder dergleichen.

Das Koppelteil 150 kann dazu dienen, die Schirmvorrichtung 120 gegenüber der Schwerkraft abzustützen. Insbesondere kann das Koppelteil 150 dazu dienen, die Schirmvorrichtung 120 an das Zugmittel 160 anzukoppeln. Das Koppelteil 150 kann als Schaumelement, insbesondere aufweisend einen verfestigten Schaum, z.B. aus Polyvinylchlorid, Polystyrol oder Polyurethan, insbesondere aus extrudiertem Polystyrol (XPS). Auf diese Weise kann ein ausreichend steifes, aber dennoch leichtes Koppelteil 150 erzielt werden.

Beispielsweise kann das Koppelteil 150 als plattenförmiges Element ausgebildet sein. Denkbar ist auch eine rahmenförmige Ausgestaltung des Koppelteils 150.

Vorzugsweise ist eine Erstreckung des Koppelteils 150 in Breitenrichtung B geringer als in Längsrichtung L. In Längsrichtung L kann die Erstreckung des Koppelteils 150 der des Schirmelements 130 entsprechen oder geringer sein, beispielsweise mindestens 90 % oder mindestens 75 % betragen. Vorzugsweise sind die Erstreckungen des Koppelteils 150 sowohl in Breitenrichtung B als auch in Längsrichtung L deutlich größer als seine Erstreckung in Höhenrichtung H. Die Erstreckung in Breitenrichtung B kann beispielsweise etwa 20 cm betragen, was für Erdbeerkulturen ein ausreichendes lichtes Breitenmaß des Aufnahmeraums 123 bereitstellen kann.

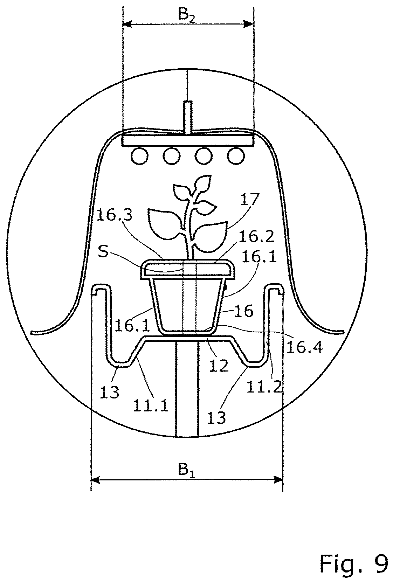

Das Koppelteil 150 weist in seiner horizontalen Erstreckung eine Breite B₂ auf (vgl. Fig. 9). Diese Breite B₂ kann zumindest 80% einer Breite B₁ des Trägers 11 der Obstanlage 10 betragen. Bevorzugt beträgt die Breite B₂ des Koppelteils 90%, besonders bevorzugt 100%, weiter bevorzugt 110% und weiter bevorzugt 120% der Breite B₁ des Trägers 11 der Obstanlage 10. Auf diese Weise kann sichergestellt werden, dass die Seitenteile 132 der Abdeckvorrichtung 100 die Seitenwände 11.2 des Trägers 11 überdecken.

Das Koppelteil 150 kann beispielswiese unter Vermittlung eines Anschlussstücks 151 an das Zugmittel 160 angebunden sein. Wie in Figur 4 zu erkennen ist, kann das Schirmelement 130 bereichsweise auf dem Koppelteil 150 aufliegen. Wie vorliegend kann vorgesehen sein, dass das Schirmelement 130 mit seinem Oberteil 131 zumindest bereichsweise auf dem Koppelteil 150 aufliegt. Insbesondere kann das Schirmelement 130 in seinem Oberteil 131 eine Öffnung 135 aufweisen, durch die das Anschlussstück 151 und/oder das Zugmittel 160 durchgeführt sein kann/können.

Mittels der Hebevorrichtung 140 kann die Schirmvorrichtung 120 angehoben und abgesenkt werden. In Figur 4 ist in durchgezogenen Linien eine Arbeitsposition der Schirmvorrichtung 120 gezeigt, in der sie auf die Obstanlage 10 abgesenkt ist, sodass die Pflanzen 17 innerhalb des Aufnahmeraums 123 aufgenommen sind. Oberhalb der Schirmvorrichtung 120 in Arbeitsposition ist in gestrichelten Linien eine erste Verstellposition angedeutet. In dieser ist die Schirmvorrichtung 120 nach oben angehoben, wie dies durch Pfeil A angedeutet ist. Figur 6 zeigt in umgekehrter Darstellung die Arbeitsposition in gestrichelten Linien und die erste Verstellposition in durchgezogenen Linien. Deutlich zu erkennen ist, dass eine Traglänge 161 des Zugmittels 160 zwischen der Schirmvorrichtung 120 und dem Tragelement 170 in der Arbeitsposition länger ist als in der ersten Verstellposition. Mit anderen Worten kann durch eine Veränderung der Traglänge 161 des Zugmittels 160 das Anheben und Absenken der Schirmvorrichtung 120 bewirkt werden.

Das Tragelement 170 kann dazu ausgebildet sein, um seine Längsachse 171 drehbar an der übergeordneten Struktur abgestützt zu werden. Gemäß der in den Figuren dargestellten Ausführungsform können hierzu Lagerteile 176 vorgesehen sein, die gegenüber Stützstellen 178 der übergeordneten Struktur abgestützt sein können. Vorliegend ist diese Abstützung mittelbar, unter Zwischenschaltung der Verstellvorrichtung 190 vorgesehen, auf die später näher eingegangen wird. Entlang der Längsrichtung L können mehrere Lagerteile 176 und/oder mehrere Stützstellen 178 vorgesehen sein, wie dies aus Figur 6 hervorgeht.

Das Tragelement 170 kann eine länglich ausgebildete Einheit sein. Insbesondere ist denkbar, dass das Tragelement 170 ein Hohlprofil, insbesondere ein Rohr, aufweist und/oder als ein solches ausgebildet ist. Auf diese Weise lässt sich eine hohe Steifigkeit bei einem geringen Gewicht erreichen.

Es kann vorgesehen sein, dass die Veränderung der Traglänge 161 des Zugmittels 160 durch eine Drehung des Tragelements 170 um seine Längsachse 171 bewirkt wird. Hierzu kann im einfachsten Fall, wie es in den Figuren 4 und 6 angedeutet ist, das Zugmittel 160 auf dem Tragelement 170 aufwickelbar sein. Dann bewirkt eine Umdrehung des Tragelements 170 in etwa eine Veränderung der Traglänge 161 um ein Umfangsmaß des Tragelements 170. Denkbar ist jedoch auch, dass das Zugmittel 160 beispielsweise auf einer Seilscheibe oder dergleichen aufgewickelt wird, die an dem Tragelement 170 angebracht ist.

Das Tragelement 170 kann, je nach Länge der abzudeckenden Obstanlage 10, eine erhebliche Länge aufweisen. Um einen Transport zu dem geplanten Einsatzort zu erleichtern, kann vorgesehen sein, dass das Tragelement 170 entlang seiner Längsachse 171 mehrere Segmente 172 aufweist. Hierbei kann es sich insbesondere um Holprofil-Segmente 172 handeln. Die Segmente 172 können miteinander form-, kraft- und/oder stoffschlüssig verbunden sein. Eine formschlüssige Verbindung kann insbesondere in Umfangsrichtung des Tragelements 170 vorgesehen sein, um eine ausreichende Torsionssteifigkeit und/oder zuverlässige Drehung des Tragelements 170 um seine Längsachse 171 zu gewährleisten.

In Figur 7 ist beispielhaft ein Schnitt durch zwei Segmente 172 gezeigt. Demnach kann ein Segment 172 jeweils an einem Ende einen Steckansatz 174 aufweisen und an einem gegenüberliegenden Ende eine Steckaufnahme 175. Der Steckansatz 174 eines Segments 172 kann dann in der Steckaufnahme 175 des benachbarten Segments 172 aufgenommen sein. Auf diese Weise kann eine formschlüssige Verbindung in Richtung der Längsachse 171 und senkrecht zu der Längsachse 171 erreicht werden. Alternativ ist natürlich auch denkbar, dass es verschiedene Segmente 172 gibt, wobei eine Sorte an gegenüberliegenden Enden jeweils Steckansätze 174 aufweist, und eine andere Sorte an gegenüberliegenden Enden jeweils Steckaufnahmen 175. Dann können die Segmente 172 nach Sorte abwechselnd aneinander angereiht werden.

Im Bereich der Steckansätze 174 und Steckaufnahmen 175 können beispielsweise Stoffschlussmittel, insbesondere Klebstoffe vorgesehen sein, um ein unbeabsichtigtes Lösen und/oder verdrehen der Segmente 172 zu verhindern. Denkbar ist auch, miteinander korrespondierende Formschlusselemente im Bereich der Steckansätze 174 und Steckaufnahmen 175 vorzusehen, die einer gegenseitigen Verdrehung entgegenwirken. Geeignet können hierfür beispielsweise profilierte Konturen der Steckansätze 174 und Steckaufnahmen 175 sein, beispielsweise Polygonkonturen. Denkbar ist auch, dass im Bereich der Steckansätze 174 ein Vorsprung ähnlich einer Passfeder, und im Bereich der Steckaufnahmen 175 eine korrespondierende Nut vorgesehen ist.

Figur 8 zeigt einen Schnitt durch eine alternative Ausgestaltungsvariante eines Tragelement 170, gemäß dem benachbarte Segmente 172 mittels eines Koppelstücks 173 verbunden sind. Das Koppelstück 173 kann wie vorliegend ein Rohrstück sein, das beidseitig Endabschnitte der Segmente 172 aufnimmt. Die Endabschnitte der Segment 172 können beispielsweise mit dem Koppelstück 173 verklebt sein. Denkbar ist, dass das Koppelstück 173 einen Absatz 173.1 aufweist, der die aufgenommenen Segmente 172 voneinander beabstandet. Bei Verwendung eines Koppelstücks 173 können die Segmente 172 insbesondere ohne Steckaufnahmen 175 und/oder Steckansätze 174 ausgebildet sein.

Auch bei einer Ausgestaltung gemäß Figur 8 können Formschlusselemente vorgesehen sein, wie zuvor im Hinblick auf Figur 7 beschrieben. Insbesondere können Formschlusselemente zwischen den Endabschnitten der Segmente 172 und dem Koppelstück 173 vorgesehen sein.

Wie bereits erwähnt, kann die Veränderung der Traglänge 161 des Zugmittels 160 durch eine Drehung des Tragelements 170 um seine Längsachse 171 bewirkt werden. Hierzu kann ein Antrieb 180 vorgesehen sein, der beispielsweise elektrisch ansteuerbar sein kann. Denkbar ist auch ein manueller Antrieb 180.

In Figur 6 ist schematisch ein Beispiel für einen manuellen Antrieb 180 dargestellt, mittels dessen das Tragelement 170 in Drehung versetzt werden kann. Der Antrieb 180 kann dazu ausgebildet sein, unter Vermittlung eines Übertragungsmittels 183 eine Einwirkung eines Benutzers auf ein Bedienteil 184 in eine Drehung des Tragelements 170 umzusetzen. Gemäß der vorliegenden Gestaltung kann der Antrieb 180 ein erstes Antriebselement 181 aufweisen, das beispielsweise als Seilscheibe, Riemenscheibe oder Kettenrad mit dem Tragelement 170 drehfest verbunden sein kann. Das Übertragungsmittel 183 kann beispielsweise ein Seil, ein Riemen oder eine Kette sein. Das Übertragungsmittel 183 kann im Bereich des Tragelements 170 über das erste Antriebselement 181 geführt sein. Ferner kann ein zweites Antriebselement 182 vorgesehen sein, über das das Übertragungsmittel 183 geführt ist, wiederum beispielsweise eine Seilscheibe, Riemenscheibe oder ein Kettenrad. An das zweite Antriebselement 182 kann das Bedienteil 184, vorliegend als Kurbel ausgestaltet, angekoppelt sein. Durch Einwirken auf das Bedienteil 184 kann das zweite Antriebselement 182, und somit unter Vermittlung des Übertragungsmittels 183 und des ersten Antriebselements 181 das Tragelement 170 in Drehung versetzt werden, um eine Veränderung der Traglänge 161 und somit eine Veränderung der Höhenlage der Schirmvorrichtung 120 zu bewirken.

Das zweite Antriebselement 182 kann beispielsweise drehbar an einer Stützstelle 185 gelagert sein, wobei die Stützstelle 185 ähnlich den Stützstellen 178 an der übergeordneten Struktur festgelegt sein kann. Denkbar ist jedoch auch, dass die Stützstelle 185 translatorisch fest mit der Hebevorrichtung 140, insbesondere mittelbar mit dem Tragelement 170 gekoppelt ist, sodass eine gemeinsame horizontale Verstellung, beispielsweise mittels der Verstellvorrichtung 190, ermöglicht wird.

Mittels des Verstellvorrichtung 190 kann eine horizontale Verstellung der Schirmvorrichtung 120 ermöglicht werden. Wie in Figur 4 zu erkennen ist, kann die Verstellvorrichtung 190 eine Schiene 191 aufweisen, die mittelbar oder unmittelbar an den Stützstellen 178 abgestützt sein kann. Auf der Schiene 191 können die Lagerteile 176 beispielsweise mittels Rollen 192 verstellbar geführt sein. Eine Verstellung in horizontaler Richtung kann insbesondere eine Verstellung in Breitenrichtung B umfassen.

In Figur 4 ist in gestrichelter Darstellung rechts im Bild angedeutet, dass die Schirmvorrichtung 120 beispielsweise in horizontaler Richtung, nämlich in Breitenrichtung B neben die Obstanlage 10 verstellt sein kann. Ausgehend von der Arbeitsposition, die in durchgezogenen Linien dargestellt ist, kann die Schirmvorrichtung 120 mittels der Hebevorrichtung 140 gemäß Pfeil A in die erste Verstellposition verstellt werden, die oberhalb der Schirmvorrichtung 120 in gestrichelten Linien angedeutet ist. Von der ersten Verstellposition aus kann die Schirmvorrichtung 120 mittels der Verstellvorrichtung 190 horizontal verschoben werden, wie dies durch Pfeil B angedeutet ist. Beispielsweise können die Lagerteile 176 entlang der Schiene 191 horizontal verstellt werden. Die Verstellung bewirkt vorzugweise, dass die Schirmvorrichtung 120 nicht mehr oberhalb der Obstanlage 10 angeordnet ist, sondern in horizontaler Richtung, insbesondere in Breitenrichtung B gegenüber dieser versetzt angeordnet ist. Dies kann einer zweiten Verstellposition der Schirmvorrichtung 120 entsprechen. Ausgehend von der zweiten Verstellposition kann die Schirmvorrichtung 120 mittels der Hebevorrichtung 140 abgesenkt werden, wie durch Pfeil C angedeutet. Insbesondere kann die Schirmvorrichtung 120 bis auf den Boden 14 oder nahezu bis auf den Boden 14 abgesenkt werden. Dies kann einer dritten Verstellposition entsprechen, die in Figur 4 in der rechten Bildhälfte in gestrichelten Linien angedeutet ist. Wenn die Schirmvorrichtung 120 in der dritten Verstellposition ist, stört sie nicht bei der Arbeit an der Obstanlage 10 und/oder behindert nicht eine Lichteinstrahlung, insbesondere Sonneneinstrahlung, auf die Pflanzen 17 der Obstanlage 10.

Die Figur 9 zeigt eine Detaildarstellung der Schirmvorrichtung 120 aus der Figur 4. Die Ausgestaltungsvariante zeigt, dass der Topf 16 zumindest eine Querseite 16.2 und zumindest zwei Längsseiten 16.1 aufweisen kann. Bevorzugt sind zwei Querseiten 16.2 und zwei Längsseiten 16.1 vorgesehen. In die Querseite 16.2 kann nun eine Durchführung, beispielsweis in Form eines Schlitzes S, eingebracht werden. Der Schlitz S kann sich von der Oberseite 16.3 des Topfes bis zu dem Boden 16.4 des Topfes 16 erstrecken. Es kann aber auch so sein, dass der Schlitz S nicht bis zum Boden 16.4 des Topfes 16 reicht, sondern nur teilweise in den Topf 16 eingebracht wird. In die Durchführung, insbesondere in den Schlitz S, kann nun ein Heizelement (nicht dargestellt), insbesondere ein Heizkabel, eingebracht werden. Wenn mehrere Töpfe 16 aneinandergereiht werden, stehen die Schlitze S auf den Querseiten 16.2 der Töpfe 16 in Flucht zueinander. Dann kann ein Heizelement, insbesondere ein Heizkabel, auf einfachste Weise eingebracht und durch die Töpfe 16 hindurchgeführt werden. Dadurch ergibt sich insbesondere der Vorteil, dass das Heizelement Wärme direkt in das Substrat, insbesondere in die Erde, der Töpfe 16 abgibt. Damit ergibt sich in diesem Bereich eine Erwärmung, was die Verfrühung der Reife der Pflanzen 17 begünstigt.

Es kann auch so sein, dass das Heizelement nicht durch eine Durchführung der Töpfe 16 hindurchgeführt wird, sondern auf der Oberseite 16.3 der Querseiten 16.2 aufliegt. Somit würde die Wärme eines Heizelements dennoch direkt in das Substrat gelangen.

## Patentansprüche

1. Abdeckvorrichtung (100) für eine Obstanlage (10), insbesondere für eine Stellage-Obstanlage,
umfassend
- eine Schirmvorrichtung (120) zur zumindest teilweisen Abdeckung zumindest einer Pflanze (17) der Obstanlage (10) von oben und von zumindest zwei einander gegenüberliegenden Seiten, wobei die Schirmvorrichtung (120) einen oberen Abdeckbereich (121) und zumindest zwei einander gegenüberliegende seitliche Abdeckbereiche (122) aufweist, sodass die Abdeckbereiche (121, 122) einen Aufnahmeraum (123) zur zumindest teilweisen Aufnahme der Pflanze(n) (17) nach oben und zu den Seiten hin begrenzen, und wobei die Schirmvorrichtung (120) eine unterseitige Öffnung (124) aufweist, die einen Zugang zu dem Aufnahmeraum (123) bildet,
- und eine Hebevorrichtung (140) zum Anheben und Absenken der Schirmvorrichtung (120).

2. Abdeckvorrichtung (100) nach Anspruch 1, **dadurch gekennzeichnet,**
**dass** die Schirmvorrichtung (120) einen Auflaufbereich (125) aufweist, der eine Aufweitung des Aufnahmeraums (123) im Bereich der unterseitigen Öffnung (124) bildet, derart, dass die seitlichen Abdeckbereiche (122) auf die unterseitige Öffnung (124) hin voneinander zunehmend beabstandet sind, wobei die Zunahme der Beabstandung vorzugsweise kontinuierlich erfolgt.

3. Abdeckvorrichtung (100) nach Anspruch 1 oder 2, **dadurch gekennzeichnet, dass** die Schirmvorrichtung (120) ein flächiges Schirmelement (130) aufweist, welches vorzugsweise eine Folie aufweist, insbesondere im Wesentlichen aus einer Folie gebildet ist,
dass das Schirmelement (130) einen Oberteil (131) aufweist, der den oberen Abdeckbereich (121) zumindest teilweise bildet,
und/oder dass das Schirmelement (130) Seitenteile (132) aufweist, die die seitlichen Abdeckbereiche (122) bilden, wobei vorzugsweise der Oberteil (131) und die Seitenteile (132) einteilig ineinander übergehen.

4. Abdeckvorrichtung (100) nach Anspruch 3, **dadurch gekennzeichnet,**
**dass** das Schirmelement (130) eine reflektierende Beschichtung, insbesondere eine Aluminium-Kaschierung aufweist, wobei die reflektierende Beschichtung vorzugsweise auf einer zu dem Aufnahmeraum (123) gerichteten Innenseite (133) des Schirmelements (130) aufgebracht ist, und/oder
**dass** das Schirmelement (130) eine Wärmedämmung aufweist, insbesondere in Form einer wärmedämmenden Schicht.

5. Abdeckvorrichtung (100) nach einem der Ansprüche 1 bis 4, **dadurch gekennzeichnet,**
**dass** innerhalb des Aufnahmeraums (123) zumindest eine Funktionseinheit (152) vorgesehen ist, wobei die/eine der Funktionseinheit(en) (152) eine Bewässerungseinheit, eine Beleuchtungseinheit, eine Heizeinheit, eine Zuführeinheit für Pflanzenschutzmittel und/oder eine Sensoreinheit umfasst.

6. Abdeckvorrichtung (100) nach einem der Ansprüche 1 bis 5, **dadurch gekennzeichnet,**
**dass** die Abdeckvorrichtung (100) eine Verstellvorrichtung (190) aufweist, die dazu ausgebildet ist, eine Verstellung der Schirmvorrichtung (120) und/oder der Hebevorrichtung (140) in horizontaler Richtung zu bewirken, zu unterstützen oder zumindest zu ermöglichen.

7. Abdeckvorrichtung (100) nach einem der Ansprüche 1 bis 5, **dadurch gekennzeichnet,**
**dass** die Hebevorrichtung (140) umfasst:
- ein Tragelement (170), das dazu ausgebildet ist, oberhalb der Obstanlage (10) gegenüber zumindest einer Stützstelle (178) einer übergeordneten Struktur mittelbar oder unmittelbar abgestützt zu werden,
- ein Zugmittel (160), mittels dessen die Schirmvorrichtung (120) an dem Tragelement (170) aufhängbar ist,
und **dass** die Hebevorrichtung (140) dazu ausgebildet ist, das Anheben und Absenken der Schirmvorrichtung (120) durch eine Veränderung einer Traglänge (161) des Zugmittels (160) zwischen der Schirmvorrichtung (120) und dem Tragelement (170) zu ermöglichen.

8. Abdeckvorrichtung (100) nach Anspruch 7, **dadurch gekennzeichnet,**
**dass** das Tragelement (170) dazu ausgebildet ist, um seine Längsachse (171) drehbar abgestützt zu werden,
und **dass** die Hebevorrichtung (140) dazu ausgebildet ist, durch eine Drehung des Tragelements (170) um seine Längsachse (171) die Veränderung der Traglänge (161) des Zugmittels (160) zu ermöglichen.

9. Abdeckvorrichtung (100) nach Anspruch 7 oder 8, **dadurch gekennzeichnet,**
**dass** die Hebevorrichtung (140) einen Antrieb (180) aufweist, der dazu ausgebildet ist, die Veränderung der Traglänge (161) des Zugmittels (160) zu bewirken,
wobei der Antrieb (180) einen elektrisch ansteuerbaren Antrieb und/oder einen manuellen Antrieb aufweist.

10. Abdeckvorrichtung (100) nach Anspruch 9, **dadurch gekennzeichnet, dass** der Antrieb dazu ausgebildet ist, das Tragelement (170) um seine Längsachse (171) zu drehen.

11. Abdeckvorrichtung (100) nach einem der Ansprüche 7 bis 10, **dadurch gekennzeichnet,**
**dass** das Tragelement (170) ein Hohlprofil aufweist, insbesondere als Hohlprofil ausgebildet ist,
wobei das Tragelement (170) entlang seiner Mittellängsachse (171) bevorzugt mehrere Hohlprofil-Segmente (172) aufweist, die miteinander form-, kraft- und/oder stoffschlüssig verbunden sind.

12. Abdeckvorrichtung (100) nach einem der Ansprüche 1 bis 11, **dadurch gekennzeichnet, dass** ein Koppelteil (150) vorgesehen ist, das dazu ausgebildet ist, die Schirmvorrichtung (120) gegenüber der Schwerkraft abzustützen, und dass das Koppelteil (150) als Rahmen ausgebildet ist, der sich im Wesentlichen horizontal erstreckt, oder
dass das Koppelteil (150) als Schaumelement, vorzugsweise als Schaumplatte, ausgebildet ist, das sich im Wesentlichen horizontal erstreckt, vorzugsweise aus verfestigtem Schaum von Polyvinylchlorid, Polystyrol oder Polyurethan, insbesondere aus extrudiertem Polystyrol (XPS).

13. Abdeckvorrichtung (100) nach Anspruch 12, **dadurch gekennzeichnet,**
**dass** das Koppelteil (150) dazu ausgebildet ist, die/eine Funktionseinheit(en) (152) zu halten.

14. Abdeckvorrichtung (100) nach einem der Ansprüche 1 bis 13, **dadurch**
**gekennzeichnet, dass** die Schirmvorrichtung (120) dazu ausgebildet ist, eine Mehrzahl von Pflanzen (17), insbesondere eine Mehrzahl von Pflanzen (17), die in einer Reihe aneinandergereiht sind, zumindest teilweise von oben und den Seiten abzudecken,
wobei insbesondere vorgesehen sein kann, dass die Schirmvorrichtung (120) in einer Längsrichtung (L), die parallel zu der Längsachse (171) des Tragelements (170) ausgerichtet ist, eine Länge von zumindest 1 m, vorzugsweise zumindest 10 m, insbesondere zumindest 20 m aufweist.

15. Obstanlage (10), insbesondere Stellage-Obstanlage mit einer Abdeckvorrichtung (100) nach einem der Ansprüche 1 bis 14.
